# EUROPÄISCHE PATENTSCHRIFT

(11) **EP 1 421 243 B1**
(45) Veröffentlichungstag und Bekanntmachung des Hinweises auf die Patenterteilung: **25.03.2020**
(21) Anmeldenummer: 02772126.5
(22) Anmeldetag: 07.08.2002
(51) Int. Cl.: E04C 2/04, F28D 20/02

(54) **VERWENDUNG VON MIKROKAPSELN IN GIPSKARTONPLATTEN**
USE OF MICROCAPSULES IN GYPSUM PLASTERBOARDS
UTILISATION DE MICROCAPSULES DANS DES PLAQUES DE PLATRE

(30) Priorität: 16.08.2001 DE 10139171
(43) Veröffentlichungstag der Anmeldung: 26.05.2004
(73) Patentinhaber: Microtek Laboratories, Inc., Dayton, OH 43439 (US)
(72) Erfinder: JAHNS, Ekkehard, 69469 Weinheim (DE); DENU, Hans-Jürgen, 67159 Friedelsheim (DE); PAKUSCH, Joachim, 67346 Speyer (DE); SEIBERT, Horst, 67136 Fussgönheim (DE); SCHMIDT, Marco, 68159 Mannheim (DE)
(74) Vertreter: Barton, Matthew Thomas
(86) Internationale Anmeldenummer: PCT/EP2002/008812
(87) Internationale Veröffentlichungsnummer: WO 2003/016650

(56) Entgegenhaltungen:
- EP-A- 0 418 470
- WO-A1-99/24525
- DE-A- 19 954 772
- US-B1- 6 200 681

## Beschreibung

Die vorliegende Erfindung betrifft die Verwendung von Mikrokapseln mit Latentwärmespeichermaterialien als Kapselkern in Gipskartonplatten, die sie enthaltenden Gipskartonplatten sowie ein Verfahren zu ihrer Herstellung.

Ein wichtiges Forschungsziel zur Senkung des Energiebedarfs und Nutzung vorhandener Wärmeenergie sind Latentwärmespeicher. Sie finden vielfältige Verwendung beispielsweise als Wärmetransfermedien in Heizungs- und Kühlungssystemen oder als Wärmespeicher in Isolierstoffen oder Baustoffen. Ihre Funktionsweise beruht auf der beim fest/flüssig-Phasenübergang auftretenden Umwandlungsenthalpie, die eine Energieaufnahme oder Energieabgabe an die Umgebung bedeutet. Sie können damit einerseits zur Temperaturkonstanthaltung in einem festgelegten Temperaturbereich verwendet werden und zum anderen in geeigneter Anordnung eine Verbesserung der Wärmeisolation bewirken.

Die DE-A 19 654 035 beschreibt Mikrokapseln als Wärmetransfermedium, bei denen das Speichermedium mit einer Kapselwand aus Melamin/Formaldehydharz umgeben ist.

Ebenfalls Melamin/Formaldehydharz-Mikrokapseln, jedoch mit einem speziellen Speichermedium als Kern, werden in der US-A-5 456 852 offenbart. Solche Melamin/Formaldehydharz-Kapseln weisen jedoch im Transportmedium, das in der Regel wässrig ist, über einen längeren Zeitraum unbefriedigende Hydrolysestabilität auf.

Die US-A-4 747 240 lehrt die Verwendung von makroverkapselten Speichersubstanzen mit einer Teilchengröße oberhalb 1.000 µm deren Kapselwand ein hochschmelzendes Harz ist, in Gips. Kapseln dieser Größe benötigen jedoch sehr dicke Wände, um nicht beim Mischen mit den Baustoffen zerstört zu werden.

Die EP-A-10 29 018 lehrt die Verwendung von Mikrokapseln mit einer Kapselwand aus einem hochvernetzten Methacrylsäureesterpolymer und einem Latentwärmespeicherkern in Bindebaustoffen. So lassen sich die Mikrokapseln in Gipsputz einarbeiten, ohne seine Eigenschaften zu beinflussen.

Ein wichtiger Baustoff sind Gipskartonplatten. Man verwendet sie in der Regel bei Innenausbauten zur Auskleidung von Wänden und Decken. Auch in diesem Bereich ist man bestrebt, die Wärmedämmung und die Wärmespeicherfähigkeit zu erhöhen. Ein solches Energiemanagement wird in der US 5,501,268 beschrieben, die hierzu Gipskartonplatten mit Latentwärmespeichermaterialien empfiehlt. Als Latentwärmespeicher wird eine Paraffinmischung in den Gipskarton eingearbeitet. Nähere Angaben zur Art und Weise der Zugabe werden nicht gemacht.

Die US 4,988,543 diskutiert die Möglichkeiten und Probleme der Einarbeitung von Latentwärmespeichermaterialien in Gipskartonplatten. So könnten Makrokapseln zwischen den Abschlußpapierlagen auf der Gipspaste angeordnet sein. Ferner könnten ebenfalls Makrokapseln auf der Kartonrückseite aufgebracht werden. Es ist denkbar, kleine Kügelchen mit Latentwärmespeichermaterialien zu impregnieren und diese in die Gipspaste einzuarbeiten oder die Latentwärmespeichermaterialien direkt mit der Gipspaste zu mischen. Schließlich könnte man die gesamte Gipskartonplatte mit Latentwärmespeichermaterialien tränken. Die US 4,988,543 lehrt, dass die Verwendung von Kapseln oder Kügelchen die Zwischenbindungskräfte der Platte herabsetzt. Ebenso sind Verfahren, bei denen der Gips direkt mit den Latentwärmespeichermaterialien vermischt wird, kritisch, da auch hier Haftungsprobleme mit dem Papier auftreten. Als Lösung schlägt die US 4,998,543 vor, die Gipskartonplatte von einer Seite mit Latentwärmespeichermaterialien zu besprühen.

Bei Gipskartonplatten, die mit unverkapselten Latentwärmespeichermaterialien behandelt wurden, sind bei großen Flächen Ölemissionen in die Raumluft zu befürchten. Darüberhinaus beginnen die Latentwärmespeichermaterialien im flüssigen Zustand im Gipskarton langsam zu fließen und es kommt auf Dauer zu unregelmäßigen Verteilungen, insbesondere an der Oberfläche, dem sogenannten "Schwitzen", das ebenfalls die Stabilität der Platten negativ beeinflußt. Daher lag der vorliegenden Erfindung eine Darreichungsform von Latentwärmespeichermaterialien für Gipskartonplatten als Aufgabe zugrunde, die die obengenannten Nachteile nicht aufweist.

Demgemäß wurde die Verwendung von Mikrokapseln mit Latentwärmespeichermaterialien als Kapselkern in Gipskartonplatten gefunden.

Mikrokapseln sind Teilchen mit einem Kapselkern bestehend überwiegend, zu mehr als 95 Gew.-%, aus Latentwärmespeichermaterialien und einem Polymer als Kapselwand. Der Kapselkern ist dabei je nach der Temperatur fest oder flüssig. Die mittlere Teilchengröße der Kapseln beträgt 0,5 bis 100 µm, bevorzugt 1 bis 80 µm insbesondere 1 bis 50 µm.

Latentwärmespeichermaterialien sind in der Regel lipophile Substanzen, die ihren fest/flüssig Phasenübergang im Temperaturbereich von -20 bis 120°C haben.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Beispielsweise können die obengenannten halogenierten Kohlenwasserstoffe als Flammschutzmittel beigemischt werden. Ferner können auch Flammschutzmittel wie Decabromdiphenyloxid, Octabromdiphenyloxid, Antimonoxid oder in der US-A 4 797 160 beschriebene Flammschutzadditive zugesetzt werden.

Weiterhin ist es vorteilhaft, den kapselkern-bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120°C höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen.

Je nach Temperaturbereich, in dem die Wärmespeicher gewünscht sind, werden die lipophilen Substanzen gewählt. Beispielsweise verwendet man für Wärmespeicher in Baustoffen in Europa bevorzugt lipophile Substanzen, deren fest/flüssig-Phasenübergang im Temperaturbereich von 0 bis 60°C liegt. So wählt man in der Regel für Außenanwendungen Einzelstoffe oder Mischungen mit Umwandlungstemperaturen von 0 bis 25°C und für Innenraumanwendungen von 15 bis 30°C. Bei Solaranwendungen in Verbindung mit Baustoffen als Speichermedium oder zur Überhitzungsvermeidung von transparenter Wärmedämmung, wie in der EP-A 333 145 beschrieben, sind vor allem Umwandlungstemperaturen von 30 bis 60°C geeignet. Vorteilhaft ist beispielsweise die Verwendung von Alkangemischen, wie sie als technisches Destillat anfallen und als solches handelsüblich sind.

Als Polymer für die Kapselwand können prinzipiell die für die Mikrokapseln für Durchschreibepapiere bekannten Materialien verwendet werden. So ist es beispielsweise möglich die Latentwärmespeichermaterialien nach den in der GB-A 870476, US 2,800,457, US 3,041,289 beschriebenen Verfahren in Gelatine mit anderen Polymeren zu verkapseln.

Bevorzugte Wandmaterialien, da sehr alterungsstabil, sind duroplastische Polymere. Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise Formaldehydharze, Polyharnstoffe und Polyurethane sowie hochvernetzte Methacrylsäureesterpolymere.

Unter Formaldehydharzen versteht man Reaktionsprodukte aus Formaldehyd mit
- Triazinen wie Melamin
- Carbamiden wie Harnstoff
- Phenolen wie Phenol, m-Kresol und Resorcin
- Amino- und Amidoverbindungen wie Anilin, p-Toluolsulfonamid, Ethylenharnstoff und Guanidin,
oder ihren Mischungen.

Bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die C₁-C₄-Alkyl-insbesondere Methylether dieser Formaldehydharze sowie die Mischungen mit diesen Formaldehydharzen. Insbesondere werden Melamin-Formaldehyd-Harze und/oder deren Methylether bevorzugt.

In den von den Durchschreibepapieren her bekannten Verfahren werden die Harze als Prepolymere eingesetzt. Das Prepolymere ist noch in der wässrigen Phase löslich und wandert im Verlauf der Polykondensation an die Grenzfläche und umschließt die Öltröpfchen. Verfahren zu Mikroverkapselung mit Formaldehydharzen sind allgemein bekannt und beispielsweise in der EP-A-562 344 und EP-A-974 394 beschrieben.

Kapselwände aus Polyharnstoffen und Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendiisocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole. Solche Grenzflächenpolyadditionsverfahren sind beispielsweise aus der US 4, 021, 595, EP-A 0 392 876 und EP-A 0 535 384 bekannt.

Bevorzugt werden Mikrokapseln, deren Kapselwand ein hochvernetztes Methacrylsäureesterpolymer ist. Der Vernetzungsgrad wird dabei mit einem Vernetzeranteil ≥ 10 Gew.-% bezogen auf das Gesamtpolymer erzielt.

Die bevorzugten Mikrokapseln werden aus 30 bis 100 Gew.-%, vorzugsweise 30 bis 95 Gew.-% eines oder mehrerer C₁-C₂₄-Alkylester der Acryl- und/oder Methacrylsäure als Monomere I aufgebaut. Außerdem können die Mikrokapseln aus bis zu 80 Gew.-%, vorzugsweise aus 5 bis 60 Gew.-%, insbesondere aus 10 bis 50 Gew.-%, eines oder mehrerer bi- oder polyfunktionellen Monomere als Monomere II, welche in Wasser nicht löslich oder schwer löslich sind und aus bis zu 40 Gew.-%, vorzugsweise bis zu 30 Gew.-% sonstiger Monomere III mit aufgebaut sein.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen.

Unter bi- oder polyfunktionellen Monomeren versteht man Verbindungen, die wenigstens 2 nichtkonjugierte ethylenische Doppelbindungen haben.

Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Styrol, α-Methylstyrol, β-Methylstyrol, Butadien, Isopren, Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methyl-propansulfonsäure. Daneben sind insbesondere N-Methylolacrylamid, N-Methylolmethacrylamid, Dimethylaminoethylmethacrylat und Diethylaminoethylmethacrylat zu nennen.

Die zur erfindungsgemäßen Verwendung geeigneten Mikrokapseln lassen sich durch eine sogenannte in-situ-Polymerisation herstellen. Die bevorzugten Mikrokapseln sowie ihre Herstellung sind aus der EP-A-457 154 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile Öl-in-Wasser-Emulsion herstellt, in der sie als disperse Phase vorliegen. Der Anteil der Ölphase in der Öl-in-Wasser-Emulsion liegt vorzugsweise bei 20 bis 60 Gew.-%.

Anschließend löst man die Polymerisation der Monomeren durch Erwärmung aus, wobei die entstehenden Polymere die Kapselwand bilden, welche die lipophile Substanz umschließt.

In der Regel führt man die Polymerisation bei 20 bis 100°C, vorzugsweise bei 40 bis 80°C durch. Natürlich sollte die Dispersions- und Polymerisationstemperatur oberhalb der Schmelztemperatur der lipophilen Substanzen liegen, so dass man gegebenenfalls Radikalstarter wählt, deren Zerfallstemperatur oberhalb des Schmelzpunkts der lipophilen Substanz liegt.

Die Reaktionszeiten der Polymerisation betragen normalerweise 1 bis 10 Stunden, meistens 2 bis 5 Stunden.

Verfahrenstechnisch geht man in der Regel so vor, dass man eine Mischung aus Wasser, Monomeren, Schutzkolloiden, den lipophilen Substanzen, Radikalstartern und gegebenenfalls Reglern nacheinander oder gleichzeitig dispergiert und unter intensivem Rühren auf die Zerfallstemperatur der Radikalstarter erhitzt. Die Geschwindigkeit der Polymerisation kann dabei durch Wahl der Temperatur und der Menge des Radikalstarters gesteuert werden. Zweckmäßigerweise startet man die Reaktion durch Temperaturerhöhung auf eine Anfangstemperatur und steuert die Polymerisation durch weitere Temperaturerhöhung.

Nach Erreichen der Endtemperatur setzt man die Polymerisation zweckmäßigerweise noch etwa für eine Zeit von bis zu 2 Stunden fort, um Restmonomergehalte abzusenken.

Im Anschluß an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 9924525 beschrieben, vorteilhaft durch redoxinitiierte Polymerisation, wie in der DE-A-4 435 423, DE-A-4419518 und DE-A-44 35 422 beschrieben.

Man kann auf diese Weise Mikrokapseln mit einer mittleren Teilchengröße (z-Mittel, bestimmt durch quasi elastische, dynamische Lichtstreuung) im Bereich von 0,5 bis 100 µm herstellen. Kapseln dieser Größe werden für die erfindungsgemäße Verwendung eingesetzt.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen zwischen 1 und 30 µm, vorzugsweise 3 und 12 µm, ausbilden. In der Regel werden die Mikrokapseln in Gegenwart wenigstens eines organischen Schutzkolloids hergestellt, das sowohl anionisch als auch neutral sein kann. Auch können anionische und nichtionische Schutzkolloide zusammen eingesetzt werden. Bevorzugt verwendet man anorganische Schutzkolloide gegebenenfalls in Mischung mit organischen Schutzkolloiden.

Organische neutrale Schutzkolloide sind Cellulosederivate wie Hydroxyethylcellulose, Carboxymethylcellulose und Methylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate.

Zur Verbesserung der Stabilität der Emulsionen können anionische Schutzkolloide zugesetzt werden. Besonders wichtig ist die Mitverwendung anionischer Schutzkolloide bei einem großen Gehalt an Mikrokapseln in der Dispersion, da es ohne einen zusätzlichen ionischen Stabilisator zur Bildung von agglomerierten Mikrokapseln kommen kann. Diese Agglomerate senken die Ausbeute an nutzbaren Mikrokapseln, wenn es sich um Agglomerate kleiner Kapseln von 1 bis 3 µm Durchmesser handelt, und sie erhöhen die Bruchempfindlichkeit, wenn die Agglomerate größer als etwa 10 µm sind.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen Schutzkolloide werden in der Regel in Mengen von 0,1 bis 10 Gew.-% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Mikroverkapselungen unter Einsatz solcher Pickering-Systeme sind beispielsweise in der US 3,615,972 und US 4, 016, 110 beschrieben.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern. Diese Hilfsmittel sind z.B. nichtionische, anionische, kationische oder zwitterionische Tenside oder polymere Schutzkolloide, wie sie oben oder unten beschrieben sind. Zusätzlich können Puffersubstanzen zugefügt werden, um bestimmte, jeweils vorteilhafte pH-Werte der Wasserphase einzustellen. Dies kann die Wasserlöslichkeit der feinen Partikel verringern und die Stabilität der Emulsion erhöhen. Übliche Pufferstubstanzen sind Phosphatpuffer, Acetatpuffer und Citratpuffer.

Die feinen, festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt. So wird das Magnesiumpyrophosphat durch Zusammengeben der wässrigen Lösungen von Natriumpyrophosphat und Magnesiumsulfat hergestellt.

In der Regel wird das Pyrophosphat unmittelbar vor der Dispergierung durch Vereinigen einer wässrigen Lösung eines Alkalipyrophosphats mit mindestens der stöchiometrisch erforderlichen Menge eines Magnesiumsalzes hergestellt, wobei das Magnesiumsalz in fester Form oder wässriger Lösung vorliegen kann. In einer bevorzugten Ausführungsform wird das Magnesiumpyrophosphat durch Vereinigung wässriger Lösungen von Natriumpyrophosphat (Na₄P₂O₇) und Magnesiumsulfat (MgSO₄·7H₂O) hergestellt.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert während der Öl-in-Wasser Emulsion mit einer Säure auf pH 2 bis 7 eingestellt wird.

Die anorganischen Schutzkolloide werden in der Regel in Mengen von 0,5 bis 15 Gew.-%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Vorzugsweise wählt man die Dispergierbedingungen zur Herstellung der stabilen Öl-in-Wasser Emulsion in an sich bekannter Weise so, dass die Mikrokapseln einen mittleren Durchmesser von 1 bis 35 µm, bevorzugt 3 bis 10 µm, haben.

Die Mikrokapseln können als Pulver oder als Dispersion in die Gipskartonplatten eingearbeitet werden. Dabei werden bevorzugt 5 bis 40 Gew.-%, insbesondere 20 bis 35 Gew.-%, Mikrokapseln bezogen auf das Gesamtgewicht der Gipskartonplatte (Trockensubstanz) eingearbeitet.

Die erfindungsgemäßen Gipskartonplatten bestehen aus einem Gipskern mit beidseitig angebrachten Kartonblättern.

Gipskartonplatten werden üblicherweise in der Art hergestellt, dass wässriger Gipsbrei diskontinuierlich oder kontinuierlich zwischen zwei Kartonblätter auf Cellulosebasis gebracht wird, wobei Platten geformt werden. Der Gipsbrei wird wie allgemein bekannt durch kontinuierliche Zugabe und ständigem Mischen von β-Hemihydratcalciumsulfat in Wasser mit Additiven hergestellt. Die Mikrokapseln können sowohl zusammen mit dem Calciumsulfat dosiert werden, wie auch bereits als wässrige Dispersion vorliegen. Bevorzugt wird die wässrige Dispersion mit dem Calciumsulfat vermischt, da dieses sich so besonders gut dosieren läßt. Der so erhaltene Gipsbrei wird auf die Kartonblätter aufgetragen, beispielsweise gesprüht und mit Karton abgedeckt.

Während der beginnenden Aushärtung werden die Kartonplatten in einer Presse zu Streifen mit beispielsweise 1,2 - 1,25 m Breite und 9,25, 12,5, 15,0, 18,0 oder 25 mm Dicke geformt. Diese Streifen härten innerhalb weniger Minuten aus und werden in Platten geschnitten. In diesem Stadium enthalten die Platten in der Regel noch ein Drittel ihres Gewichtes als freies Wasser. Um das Restwasser zu entfernen werden die Platten einer Wärmebehandlung bei Temperaturen von etwa 250°C unterworfen. Man verwendet hierzu beispielsweise Tunneltrockner. Die so erhaltenen Gipskartonplatten haben eine Dichte von 750 - 950 kg/m³.

Bevorzugt werden Gipskartonplatten, bei denen man einen Karton von 0,2 bis 1 mm Stärke und/oder einer Dichte von 100 bis 500 g/m² verwendet.

Für Gipskartonplatten wird üblicherweise Karton mit einem Gewicht von ca. 300 g/m² eingesetzt. Kartons dieser Art werden meist in mehreren Schichten hergestellt, wobei die letzte Schicht die Deckschicht des Kartons darstellt und ein Gewicht von 10 bis 100 g/m², vorzugsweise von 30 bis 70 g/m² hat.

Neben diesen herkömmlichen Kartons ist es ferner möglich Kartonblätter zu verwenden, bei denen die äußeren Deckschichten beider Kartonblätter, die Zwischenschichten oder die gesamten Kartonblätter 10 - 90, vorzugsweise 40 - 70 Gew.-% Polyolefinfibride enthalten.

Die bei der Herstellung der Gipskartonplatten notwendige Wärmebehandlung bei ca. 250°C ergibt nach dem Verdampfen des Wassers eine Oberflächentemperatur an den Platten, die ausreicht, die Polyolefinfibride zu plastifizieren und mit den übrigen Kartonbestandteilen zu verkleben. Es erfolgt eine weitgehende Schließung der Poren an der Deckschicht des Kartons und die Oberfläche der Gipskartonplatte wird naßfest. Diese die Poren verschließende Verklebung tritt erst ein, wenn alles Wasser verdampft ist, da vorher infolge Dampfentwicklung die Temperatur von 100°C in der Platte nicht überschritten werden kann. Durch Nachschalten einer Heißgasdusche mit einer Gastemperatur von 130° bis 300°C, vorzugsweise 140° bis 200°C an die Wärmebehandlung kann der Effekt noch verbessert werden. Die Behandlung mit Heißgas kann auch, unabhängig von der Wärmebehandlung während der Fertigung, zu einem späteren Zeitpunkt vorgenommen werden. Anstelle einer Heißgasdusche kann auch eine glatte oder geprägte Walze, deren Temperatur über dem Erweichungspunkt der Polyolefinfibride liegt, eingesetzt werden.

Gemäß einer Ausführungsform werden Kartons für Gipskartonplatten verwendet, deren gesamte Masse oder die einzelner Schichten, vorzugsweise aber die Deckschicht aus einer Mischung von 90 - 10 Gew.-%, vorzugsweise 60 - 30 Gew.-% Cellulosefasern und 10 - 90 Gew.-%, vorzugsweise 40 - 70 Gew.-% Polyolefinfibride, bezogen auf die Trockensubstanz, besteht.

Polyolefinfibride sind Polyolefinfasern, die beispielsweise durch ein Entspannungsverdampfungsverfahren hergestellt werden, bei dem eine unter Druck stehende, überhitzte Emulsion aus
a) einer Lösung eine Polyolefins in einem leicht siedenden Lösungsmittel und
b) einer wässrigen Lösung eines Hydrophilierungsmittels
durch eine Düse in eine Zone mit niedrigem Druck ausgespritzt wird und dabei das Hydrophilierungsmittel in einer Menge von 0,2 - 3 Gew.-%, vorzugsweise 0,5 - 2 Gew.-%, bezogen auf das Polyolefine, eingesetzt wird.

Als Polyolefin eignet sich vor allem Polyäthylen mit einer reduzierten spezifischen Viskosität von 0,3 bis 30 dl/g, vorzugsweise von 0,7 bis 10 dl/g (bestimmt nach H. Weslau, Kunststoffe 49 (1959) S. 230) und einer Dichte von 0,93 bis 0,97 g/cm³ oder Polypropylen. Diese Polyolefine können geringe Mengen von Comonomeren mit 3 bis 6 Kohlenstoffatomen enthalten.

Als Hydrophilierungsmittel eignen sich grundsätzlich alle bekannten Emulgatortypen, bevorzugt werden jedoch polymere Hydrophilierungsmittel mit Amingruppen, Amidgruppen, Carboxylgruppen und/oder Hydroxylgruppen eingesetzt. Sehr gute Ergebnisse werden insbesondere mit Polyvinylalkohol mit einer Lösungsviskosität (gemessen in einer 4 %igen Lösung bei 20°C in Wasser) von 4 bis 70 cP und einem Verseifungsgrad von 80 bis 99,5 % erreicht.

Verfahren zur Herstellung von Polyolefinfibriden sind beispielsweise der DE-A-2718322 zu entnehmen.

Es wurde gefunden, dass Kartons mit Polyolefinfibriden sich besonders vorteilhaft mit den Mikrokapseln enthaltenden Gips verarbeiten lassen und besonders gute Zwischenbindungskräfte aufweisen.

Anstelle von Karton aus Cellulosebasis können auch alternative, faserartige Gebilde als beidseitige Abdeckungen der erfindungsgemäßen Gipskartonplatten verwendet werden. Alternative Materialien sind Polymerfasern aus z.B. Polypropylen, Polyester, Polyamid, Polyacrylaten, Polyacrylnitril und dergleichen. Auch Glasfasern sind geeignet. Die alternativen Materialien können als Gewebe und als sogenannte "nonwovens", also als vliesartige Gebilde eingesetzt werden.

Derartige Gipskartonplatten sind beispielsweise aus der US 4,810,569, US 4, 195, 110 und US 4,394,411 bekannt.

Hohe Mikrokapselanteile im Gips können unter Umständen zu einer Hydrophobierung des Gipsbaustoffes führen. Dies kann teilweise auch eine verschlechterte Haftung zu den Untergründen, auf denen diese modifizierten Gipse appliziert werden zur Folge haben, so kann sich die Haftung zum Karton verschlechtern.

Es wurde nun gefunden, dass man eine erhöhte Haftfestigkeit auf Untergründen wie Karton durch Zusatz natürlicher und/oder synthetischer Polymere erhält. Geeignete wasserlösliche Polymere sind: Stärke und Stärkeether, höhermolekulare Methylcellulose und andere Cellulosederivate, Guar-Gummi-Derivate, thermoplastische Dispersionspulver und Flüssigdispersionen auf Basis Vinylacetat, Ethylen-Vinylacetat, Vinylpropionat, Styrol-Butadien, Styrolacrylat und Reinacrylat. Die zugegebene Menge der Polymere beträgt 0,1 bis 5 Gew.-% bezogen auf das Gesamttrockengewicht Gips und Latentwärmespeicher. Die genannten Polymere verbessern nicht nur die Haftung auf dem Untergrund des Kartons, sondern erhöhen meist auch die Bruch- und Biegezugfestigkeit der erfindungsgemäßen Gipskartonplatten. Gipskartonplatten, deren Gips zu 0,1 bis 5 Gew.-% bezogen auf das Gesamttrockengewicht von Gips und Latentwärmespeicher wasserlösliche Polymere enthält, werden bevorzugt.

Es ist ferner erfindungsgemäß, den Gipsmassen als weitere Additive Wasserretentionsmittel und vorteilhafterweise Verdicker hinzuzufügen. Beispiele sind Polyvinylalkohol, Cellulosederivate wie Hydroxyethylcellulose, Hydroxypropylcellulose, Carboxymethylcellulose, Polyacrylsäure und Copolymere mit Acrylsäure, wie Polyethylen-co-acrylsäure, Polymaleinsäure-co-acrylsäure, Polyisobutylen-co-acrylsäure und acrylsäurereiche Polymerdispersionen mit Styrol oder Acrylsäureestern oder Vinylacetat, wie sie als Verdicker für z.B. die Papierveredelung eingesetzt werden. Üblicherweise werden die Wasserretentionsmittel und/oder Verdicker in Mengen von 0, 05 bis 2 Gew.-% bezogen auf das Gesamttrockengewicht Gips und Latentwärmespeicher eingesetzt. Der so modifizierte Gips weist hervorragende Verarbeitungseigenschaften auf.

Daher sind Gipskartonplatten, deren Gips zu 0, 05 bis 2 Gew.-% Wasserretentionsmittel aufweist, bezogen auf das Gesamttrockengewicht von Gips und Latentwärmespeicher, erfindungsgemäß.

Die vorliegende Erfindung betrifft weiterhin ein Verfahren zur Herstellung von Gipskartonplatten, welche aus einem Gipskern mit beidseitig angebrachten Kartonblättern bestehen, durch Einbringen eines wässrigen Gipsbreies zwischen zwei Kartonblättern auf Cellulosebasis und Wärmebehandlung der so gebildeten Platten, dadurch gekennzeichnet, dass der Gipsbrei Mikrokapseln im Gewichtsverhältnis Mikrokapseln/Calciumsulfathalbhydrat von 5/95 bis 40/60 enthält.

Die erfindungsgemäßen Gipskartonplatten zeichnen sich durch gute Wärmespeichereigenschaften aus. Die Platten haben eine gute mechanische Stabilität und zeigen gute Lagereigenschaften. Darüberhinaus weisen sie keinen Austritt von Wärmespeicherwachsen auf.

Die Gipskartonplatten eignen sich zum Innenausbau von Gebäuden als Wand- und Deckenelemente. Die nachfolgenden Beispiele sollen die Erfindung näher erläutern.

Bei den Prozentangaben in den Beispielen handelt es sich um Gewichtsprozent. Die in dem Beispiel angegebenen K-Werte wurden nach H. Fikentscher, Cellulose-Chemie, Bd. 13, 58-64 und 71-74 (1932) in 1%iger wässriger Lösung bei einer Temperatur von 25°C bestimmt.

### Herstellung der Mikrokapseln

**Wasserphase:**

| | |
|---|---|
| 930 g | Wasser |
| 263 g | einer 30 %igen kolloidalen Dispersion von SiO₂ in Wasser bei pH 9,8 (12 nm, 240 m²/g) |
| 18,2 g | einer 20%igen wässrigen Lösung eines Polymers aus 59 % 2-Acryamido-2-methylpropansulfonsäure-Na-Salz, 20 % Acrylsäure, 20 % Methylacrylat und 1 % Styrol, K-Wert: 69 |
| 10,5 g | einer 2,5 %igen, wässrigen Kaliumdichromatlösung |

**Ölphase:**

| | |
|---|---|
| 1100 g | C₁₈-C₂₀-Alkan (techn. Destillat) |
| 129,5 g | Methylmethacrylat |
| 57,4 g | Butandioldiacrylat |
| 1,9 g | Ethylhexylthioglykolat |
| 2,3 g | t-Butylperpivalat |

Zulauf 1: 2,73 g t-Butylhydroperoxid, 70%ig in Wasser Zulauf 2: 0,84 g Ascorbinsäure, 0, 061 g NaOH, 146 g H₂O Bei Raumtemperatur wurde die obige Wasserphase vorgelegt und mit 14 g 10%iger Salzsäure auf pH 7 gestellt. Nach Zugabe der Ölphase wurde mit einem schnellaufenden Dissolverrührer bei 4200 Upm dispergiert und der pH mit 15 g 10 %iger Salzsäure auf pH 4 gestellt. Nach 40 Minuten Dispergierung wurde eine stabile Emulsion der Teilchengröße 2 bis 8 µm Durchmesser erhalten. Die Emulsion wurde unter Rühren mit einem Ankerrüher in 4 Minuten auf 56°C aufgeheizt, innerhalb von weiteren 20 Minuten auf 58°C, innerhalb von weiteren 60 Minuten auf 71°C und innerhalb von weiteren 60 Minuten auf 85°C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 45,7 % und eine mittlere Teilchengröße D(4,3) = 4,22 µm.

Die Dispersion konnte in einem Laborsprühtrockner mit Zweistoffdüse und Zyklonabscheidung mit 130°C Eingangstemperatur des Heizgases und 70°C Ausgangstemperatur des Pulvers aus dem Sprühturm problemlos getrocknet werden. Mikrokapseldispersion und Pulver zeigten beim Aufheizen in der Differentialkalorimetrie bei einer Heizrate von 1 K/Minute einen Schmelzpunkt zwischen 26,5 und 29, 5°C mit einer Umwandlungsenthalpie von 130 J/g Alkanmischung.

### Herstellung der Gipskartonplatte

Eine Mischung aus 750 g Stuckgips (β-Halbhydratgips), 250 g Mikrokapselpulver mit Latentwärmespeicher aus dem vorangegangenen Beispiel und 2 g Culminal® MC 7000 PF (Methylcellulose, Firma Aqualen) werden mit 850 g Wasser zu einem gleichförmigen Brei angerührt und sofort auf einen Karton mit 300 g/m² Gewicht gegossen und mit einem zweiten Karton abgedeckt und auf eine Dicke von 12 mm glattgestrichen. Nach einer Verfestigungszeit von 10 Minuten wird die Musterplatte in einem Trockenschrank bei 200°C für 15 Minuten getrocknet.

Die so gefertigte Gipskartonplatte hat ein normales Aussehen, die Mikrokapseln sind nicht zerstört, und die gemessene Wärmespeicherfähigkeit bei 20 bis 30°C entspricht dem rechnerischen Anteil an zugesetztem Latentwärmespeicher.

## Patentansprüche

1. Verwendung von Mikrokapseln mit Latentwärmespeichermaterialien als Kapselkern im Gipsbrei von Gipskartonplatten, wobei der Gips 0,1 bis 5 Gew.-% Polymere und 0,05 bis 2 Gew.-% Wasserretentionsmittel, jeweils bezogen auf das Gesamttrockengewicht Gips und Latentwärmespeichermaterialien, enthält, wobei die Mikrokapseln eine Polymer beinhaltende Kapselwand, eine mittlere Teilchengröße von 0,5 bis 100 µm, und einen Kapselkern, der aus mehr als 95 Gew.- % Latentwärmespeichermaterialien besteht, besitzen, und wobei die Latentwärmespeichermaterialien lipophile Substanzen sind, die ihren fest/flüssig Phasenübergang im Temperaturbereich von -20 bis 120°C haben.

2. Verwendung von Mikrokapseln nach Anspruch 1, **dadurch gekennzeichnet, dass** die Kapselwand ein duroplastisches Polymer ist.

3. Verwendung von Mikrokapseln nach Anspruch 1 oder 2, **dadurch gekennzeichnet, dass** die Kapselwand ein hochvernetztes Methacrylsäureesterpolymer ist.

4. Verwendung von Mikrokapseln nach den Ansprüchen 1 bis 3, **dadurch gekennzeichnet, dass** die Kapselwand durch radikalische Polymerisation einer Monomermischung, enthaltend
- 30 bis 100 Gew.-%, bezogen auf das Gesamtgewicht der Monomeren, eines oder mehrerer C₁-C₂₄-Alkylester der Acryl- und/oder Methacrylsäure (Monomer I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist, und
- 0 bis 40 Gew.-%, bezogen auf das Gesamtgewicht der Monomeren, sonstige Monomere (Monomere III)
erhältlich ist.

5. Gipskartonplatten mit Mikrokapseln im Gipsbrei, wobei die Mikrokapseln Latentwärmespeichermaterialien als Kapselkern enthalten, wobei der Gips 0,1 bis 5 Gew.-% Polymere und 0,05 bis 2 Gew.-% Wasserretentionsmittel, jeweils bezogen auf das Gesamttrockengewicht Gips und Latentwärmespeichermaterialien, enthält, wobei die Mikrokapseln eine Polymer beinhaltende Kapselwand, eine mittlere Teilchengröße von 0,5 bis 100 µm, und einen Kapselkern, der aus mehr als 95 Gew.-% Latentwärmespeichermaterialien besteht, besitzen, und wobei die Latentwärmespeichermaterialien lipophile Substanzen sind, die ihren fest/flüssig Phasenübergang im Temperatubereich von -20 bis 120°C haben.

6. Gipskartonplatten nach Anspruch 5, **dadurch gekennzeichnet, dass** sie 5 - 40 Gew. - % Mikrokapseln, bezogen auf die Gipskartonplatte enthalten.

7. Gipskartonplatten nach den Ansprüchen 5 oder 6, **dadurch gekennzeichnet, dass** man einen Karton von 0,2 bis 1 mm Stärke und/oder einer Dichte von 100 bis 500 g/m² verwendet.

8. Verfahren zur Herstellung von Gipskartonplatten gemäß den Ansprüchen 5 bis 7, welche aus einem Gipskern mit beidseitig angebrachten Kartonblättern bestehen, durch Einbringen des wässrigen Gipsbreies zwischen zwei Kartonblättern auf Cellulosebasis und Wärmebehandlung der so gebildeten Platten, **dadurch gekennzeichnet, dass** der Gipsbrei die Mikrokapseln im Gewichtsverhältnis Mikrokapseln/Calciumsulfathalbhydrat von 5/95 bit 40/60 enthält.

## Claims

1. A use of microcapsules using latent heat storage materials as the capsule core in a gypsum slurry of gypsum plaster boards, wherein the gypsum contains 0.1% to 5% by weight polymers and 0. 05% to 2% by weight water retention agents, each based on the total dry weight of gypsum and latent heat storage materials, wherein the microcapsules have a capsule wall comprising polymer, an average particle size of 0.5 to 100 µm and a capsule core consisting of >95% by weight latent heat storage materials, and wherein the latent heat storage materials are lipophilic substances having their solid/liquid phase transition in the temperature range from -20 to 120°C.

2. The use of microcapsules according to claim 1, **characterized in that** the capsule wall is a thermosetting plastic polymer.

3. The use of microcapsules according to claim 1 or 2, **characterized in that** the capsule wall is a highly crosslinked methacrylate ester polymer.

4. The use of microcapsules according to claims 1 to 3, **characterized in that** the capsule wall can be obtained by radical polymerization of a monomer mixture containing
- 30% to 100% by weight, based on the total weight of the monomers, of one or more C₁-C₂₄ alkyl esters of acrylic acid and/or methacrylic acid (monomer I),
- 0% to 80% by weight, based on the total weight of the monomers, of a bifunctional or polyfunctional monomer (monomer II), which is insoluble or sparingly soluble in water, and
- 0% to 40% by weight, based on the total weight of the monomers, of other monomers (monomers III).

5. The gypsum plaster boards, comprising microcapsules in the gypsum slurry, wherein the microcapsules contain latent heat storage materials as the capsule core, wherein the gypsum contains 0.1% to 5% by weight polymers and 0. 05% to 2% by weight water retention agents, each based on the total dry weight of gypsum, and latent heat storage materials, wherein the microcapsules have a capsule wall containing polymer, an average particle size of 0.5 to 100 µm and a capsule core comprised of more than 95% by weight latent heat storage materials, and wherein the latent heat storage materials are lipophilic substances having their solid/liquid phase transition in the temperature range from -20 to 120°C.

6. The gypsum plaster boards according to claim 5, **characterized in that** they contain 5-40% by weight microcapsules, based on the gypsum plaster board.

7. The gypsum plaster boards according to claim 5 or 6, **characterized in that** a plaster board having a thickness of 0.2 to 1 mm and/or a density of 100 to 500 g/m² is used.

8. The method for producing gypsum plaster board according to claims 5 to 7, consisting of a gypsum core with cardboard sheets applied to both sides by introducing the aqueous gypsum slurry between two cardboard sheets based on cellulose and heat treating the boards thereby formed, **characterized in that** the gypsum slurry contains the microcapsules in a weight ratio of 5/95 to 40/60 for microcapsules/calcium sulfate hemihydrate.

## Revendications

1. Utilisation de microcapsules qui contiennent des matériaux accumulant la chaleur latente en tant que noyau de capsule dans la pâte de plâtre de plaques de plâtre, le plâtre contenant 0,1 à 5 % en poids de polymères et 0, 05 à 2 % en poids d'agent de rétention d'eau, dans chaque cas par rapport au poids sec total du plâtre et des matériaux accumulant la chaleur latente, les microcapsules ayant une paroi de capsule contenant un polymère, une granulométrie moyenne de 0,5 à 100 µm, et un noyau de capsule constitué de plus de 95 % en poids de matériaux accumulant la chaleur latente, et les matériaux accumulant la chaleur latente étant des substances lipophiles, dont la transition de phase solide/liquide se situe dans la plage de température de -20 à 120 °C.

2. Utilisation de microcapsules selon la revendication 1, **caractérisée en ce que** la paroi des capsules est un polymère thermodurcissable.

3. Utilisation de microcapsules selon les revendications 1 ou 2, **caractérisée en ce que** la paroi des capsules est un polymère d'ester d'acide méthacrylique hautement réticulé.

4. Utilisation de microcapsules selon les revendications 1 à 3, **caractérisée en ce que** la paroi des capsules peut être obtenue par polymérisation radicalaire d'un mélange de monomères, contenant
- 30 à 100 % en poids, par rapport au poids total des monomères, d'un ou plusieurs esters d'alkyle en C₁ à C₂₄ d'acide acrylique et/ou méthacrylique (monomère I),
- 0 à 80 % en poids, par rapport au poids total des monomères, d'un monomère bi ou polyfonctionnel (monomères II) insoluble ou peu soluble dans l'eau, et
- 0 à 40 % en poids, par rapport au poids total des monomères, d'autres monomères (monomères III).

5. Plaques de plâtre comprenant des microcapsules dans la pâte de plâtre, les microcapsules contenant des matériaux accumulant la chaleur latente en tant que noyau de capsule, le plâtre contenant 0,1 à 5 % en poids de polymères et 0, 05 à 2 % en poids d'agent de rétention d'eau, dans chaque cas par rapport au poids sec total du plâtre et des matériaux accumulant la chaleur latente, les microcapsules ayant une paroi de capsule contenant un polymère, une granulométrie moyenne de 0,5 à 100 µm, et un noyau de capsule, qui se compose de plus de 95 % en poids de matériaux accumulant la chaleur latente, et les matériaux accumulant la chaleur latente étant des substances lipophiles solides/liquides, dont la transition de phase solide/liquide se situe dans la plage de température de -20 à 120 °C.

6. Plaques de plâtre selon la revendication 5, **caractérisées en ce qu'**elles contiennent 5 à 40 % en poids de microcapsules, par rapport à la plaque de plâtre.

7. Plaques de plâtre selon les revendications 5 ou 6, **caractérisées en ce que** l'on utilise un carton de 0,2 à 1 mm d'épaisseur et/ou une densité de 100 à 500 g/m².

8. Procédé de fabrication de plaques de plâtre selon les revendications 5 à 7, qui consistent en un noyau de plâtre comprenant des feuilles de carton fixées des deux côtés, par l'introduction de la pâte de plâtre aqueuse entre deux feuilles de carton à base de cellulose et le traitement thermique des plaques ainsi formées, **caractérisé en ce que** la pâte de plâtre contient les microcapsules dans un rapport pondéral microcapsules/hémihydrate de sulfate de calcium de 5/95 à 40/60.
